# EUROPÄISCHE PATENTSCHRIFT

(11) **EP 1 459 958 B1**
(45) Veröffentlichungstag und Bekanntmachung des Hinweises auf die Patenterteilung: **30.08.2006**
(21) Anmeldenummer: 04090095.3
(22) Anmeldetag: 09.03.2004
(51) Int. Cl.: B62D 1/04

(54) **Lenkrad mit mindestens einer Vorrichtung zur Befestigung von Anbauteilen**
Steering wheel with at least one arrangement to mount components
Volant de direction avec au moins un dispositif de fixation d'organes

(30) Priorität: 17.03.2003 DE 20304712 U
(43) Veröffentlichungstag der Anmeldung: 22.09.2004
(73) Patentinhaber: Takata-Petri AG, 63743 Aschaffenburg (DE)
(72) Erfinder: Hartlaub, Achim, 63868 Grosswallstadt (DE); Ludwig, Dietmar, 63911 Klingenberg (DE)
(74) Vertreter: Baumgärtel, Gunnar

(56) Entgegenhaltungen:
- EP-A- 1 142 771
- EP-A- 1 281 597
- US-A- 6 079 736

## Beschreibung

Die Erfindung betrifft ein Lenkrad mit mindestens einer Vorrichtung zur Befestigung von Anbauteilen nach dem Oberbegriff des Anspruchs 1.

Es ist bekannt zum Beispiel aus der EP 1142771 und der US 6079736, an Lenkrädern verschiedenartige Anbauteile zu befestigen, z.B. unterschiedliche Schalter. Dabei ist es in der Praxis so, daß jeder Fahrzeughersteller seine eigenen Vorstellungen bezüglich der Art und des Anbringungsortes der Anbauteile hat. Da der Lenkradhersteller aus Kostengründen die unterschiedlichen Wünsche möglichst mit vorhandenen Lenkradskelettkonstruktionen erfüllen möchte, hat er zwei Möglichkeiten um diese verwendbar zu machen.

Die eine Möglichkeit besteht darin, daß Dome, Laschen und andere Vorrichtungen zur Befestigung von Anbauteilen am Lenkrad nachträglich durch Werkzeugänderungen an die vorhandene Skelettkonstruktion angebracht werden. Der Nachteil dieser Verfahrensweise besteht darin, daß Änderungen nur über ein 3D Modell möglich sind. Das ursprüngliche Skelettwerkzeug, d.h., die Form zur Herstellung des Skeletts, muß für die Änderung zerlegt werden und die Form muß durch Erodieren verändert werden, wozu eine neue Elektrode angefertigt werden muß. Weiterhin ist es erforderlich, nach Änderungsabschluß erneut ein Freiprüfverfahren durchzuführen. Insgesamt ergeben sich bei dieser Verfahrensweise hohe zusätzliche Kosten. Ein weiterer Nachteil besteht darin, daß infolge der Materialanhäufung an den Speichen durch Dome und Laschen die Biegefestigkeit des Lenkradskeletts negativ beeinflußt wird.

Die zweite Möglichkeit besteht darin, das Lenkradskelett z.B. im Bereich der Speichen anzubohren, um dort Anbauteile anzuschrauben. Hierbei besteht der Nachteil, daß die Festigkeitskennwerte des Aluminium- oder Magnesiumskeletts vor allem beim Anbohren der Speichen beeinträchtigt werden. Dadurch wird die Gefahr erhöht, daß es bei einem Crash zum Speichenbruch kommt.

Der Erfindung liegt die Aufgabe zugrunde, Anbauteile an ein Serienlenkradskelett anzubringen, ohne daß die Festigkeitswerte des Lenkradskeletts verändert werden und ohne daß erhebliche zusätzliche Kosten verursacht werden.

Erfindungsgemäß wird das gemäß den Merkmalen des Anspruchs 1 erreicht.

Bei einem Lenkrad mit mindestens einer Vorrichtung zur Befestigung von Anbauteilen, wobei das Lenkrad ein umschäumtes Lenkradskelett aufweist, ist erfindungsgemäß als Vorrichtung für die Befestigung von Anbauteilen ein Halteteil am Lenkradskelett vorgesehen, das durch die Umschäumung fixiert ist und für die Befestigung von mindestens einem Anbauteil aus der Umschäumung herausragt. Ein Vorteil dieser Anordnung besteht darin, daß Serienlenkräder ohne großen Aufwand und ohne Festigkeitsverlust des Lenkradskeletts Kundenvorgaben angepaßt werden können, da am Lenkrad keine konstruktiven Änderungen vorgenommen werden müssen bzw. ein Anbohren des Lenkradskeletts nicht erforderlich ist. Es ist lediglich erforderlich, das zusätzliche Halteteil anzufertigen und vor dem Umschäumen des Lenkradskeletts zusammen mit diesem in der Lenkrad-Schäumform zu positionieren. Dadurch können Entwicklungszeiten und -kosten, insbesondere auch durch den Wegfall zusätzlicher Prüfungen eingespart werden. Bereits zu Beginn einer Entwicklung sind oft verschiedene Ausführungsvarianten eines Lenkrades erforderlich. Auch in diesem Fall sind durch Anwendung der Erfindung weniger Werkzeuge erforderlich.

Der weitere Vorteil besteht darin, daß eine Fixierung unabhängig vom Material des Lenkradskeletts möglich ist, d.h., die Fixierung ist sowohl an Aluminium- als auch an Magnesiumskeletten möglich.

In einer Ausführungsform ist vorgesehen, daß das Halteteil am Lenkradskelett anliegt. Durch die Umschäumung wird es in dieser Lage fixiert. Zusätzlich kann das Halteteil bei dieser Ausführungsform am Lenkradskelett angeklebt sein. Dadurch wird eine erhöhte Haltbarkeit erzielt und auch die Fixierung innerhalb der Schäumform erleichtert.

In einer zweiten Ausführungform ist vorgesehen, daß zwischen dem Lenkradskelett und dem Halteteil ein Zwischenraum vorhanden ist, der von der Lenkradumschäumung ausgefüllt ist.

Das Halteteil kann unterschiedlich ausgebildet sein. So ist in einer Ausführungsform vorgesehen, daß das Halteteil das Lenkradskelett an einer Stelle zumindest teilweise umschließt, wobei es z.B. U-förmig oder L-förmig ausgebildet sein kann.

Weiterhin kann das Halteteil im Bereich des Lenkradskeletts aber auch flach ausgebildet sein. In diesem Fall liegt das Halteteil also nur einseitig am Lenkradskelett, ohne es zumindest teilweise zu umschließen.

Das Halteteil ist vorzugsweise an einer Speiche des Lenkrades vorgesehen. Weiterhin ist das Halteteil vorzugsweise als Blechteil ausgebildet. Ein Blechteil läßt sich ohne aufwendige Werkzeuge und damit kostengünstig in unterschiedlichsten Abmessungen und Formen herstellen. Als Halteteil kann aber auch ein Kunststoffteil vorgesehen sein.

Zur Anpassung an die unterschiedlichsten Anforderungen ist es zweckmäßig, die Anbauteile nicht direkt am Halteteil sondern an einem mit dem Halteteil verbundenen Adapter, z.B. an einer Adapterplatte, als erstem Anbauteil zu befestigen. Dadurch kann das Halteteil unabhängig von der Art und Größe der Anbauteile einfach gestaltet sein und ist unter Umständen für unterschiedliche Kundenaufträge verwendbar.

Das Halteteil kann mit den Anbauteilen durch Schrauben oder Niete verbunden sein. An dieser Stelle sind diese verwendbar, da das Lenkradskelett nicht angebohrt werden muß, und somit die Festigkeit des Lenkradskeletts nicht beeinträchtig wird.

In einer Ausführungsform ist vorgesehen, daß der innerhalb der Lenkradumschäumung liegende Abschnitt des Halteteils eine geringere Längenausdehnung aufweist als der außerhalb der Lenkradumschäumung liegende Abschnitt. Unter Längenausdehnung wird bei der Anordnung des Halteteils an einer Speiche die Ausdehnung in Richtung der Speichenlängsachse verstanden. Natürlich sind entsprechend den unterschiedlichen Anforderungen andere Längenverhätnisse möglich.

Die Erfindung soll in Ausführungsbeispielen anhand von Zeichungen erläutert werden. Es zeigen:
- Fig. 1: eine perspektivische Ansicht eines Abschnitt eines Lenkradskeletts;
- Fig. 2: einen Schnitt durch das Lenkrad entlang der Schnittlinie A - A der Fig. 1 ;
- Fig. 3: einen Schnitt durch das Lenkrad entlang der Schnittlinie B - B der Fig. 1;
- Fig. 4: einen Schnitt durch ein Lenkrad mit einer zweiten Ausführungsform des Halteteils;
- Fig. 5: einen Schnitt durch ein Lenkrad mit einer dritten Ausführungsform des Halteteils.

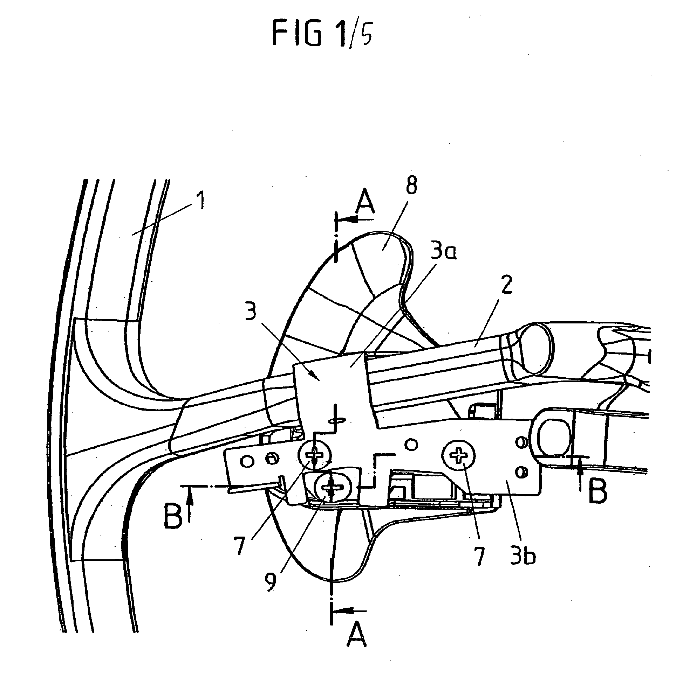

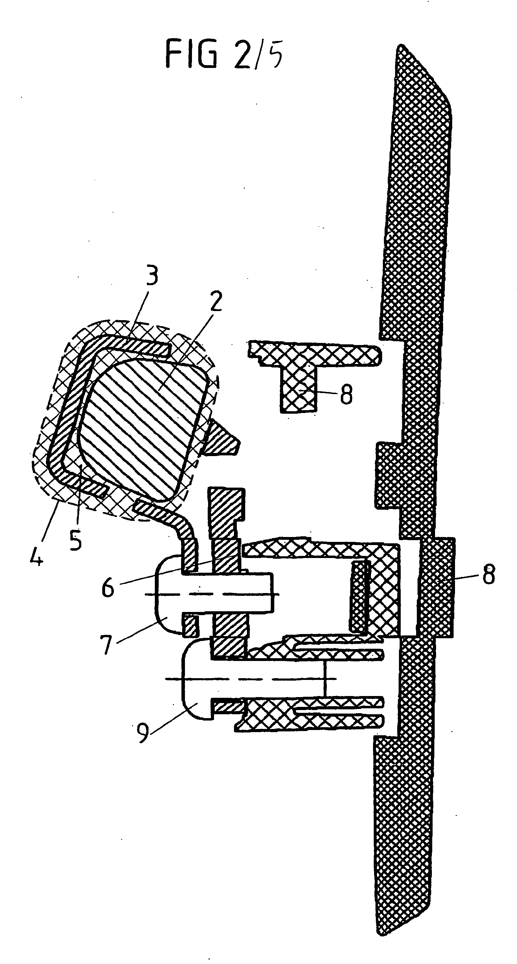

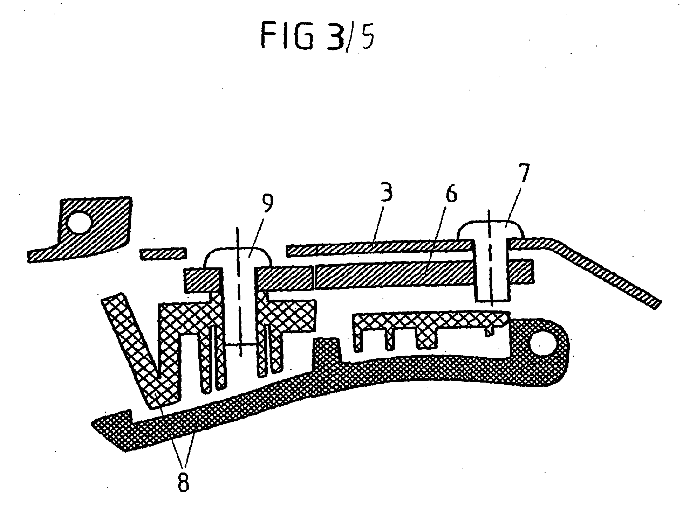

In den Figuren 1 bis 3 ist ein Abschnitt eines Lenkradskeletts mit einem Lenkradkranz 1 und einer Speiche 2 dargestellt. An dieser ist ein Halteteil 3 in Form eines Halteblechs vorgesehen. Wie aus der Fig. 2 ersichtlich ist, ist das Halteteil 3 im Bereich der Speiche 2 U-förmig ausgebildet, so daß es die Speiche teilweise umgreift. Wie aus der Fig. 2 weiter ersichtlich ist, liegen die Speiche 2 und der U-förmige Abschnitt des Halteteils 3 innerhalb einer Lenkradumschäumung 4, wobei sich die Umschäumung auch in den Spalt 5 zwischen der Speiche 2 und dem Halteteil 3 erstreckt. So hält die Lenkradumschäumung 4 das Halteteil 3 sicher an der Speiche 2, obwohl ohne Umschäumung keine mechanische Verbindung zwischen beiden besteht. Beide Teile werden in der vorgesehenen Position in der Lenkrad-Schäumform fixiert und anschließend eingeschäumt. Wie aus der Fig. 1 ersichtlich ist, weist bei dieser Ausführungsform der innerhalb der Lenkradumschäumung 4 liegende Abschnitt 3a des Halteteils 3 eine geringere Längenausdehnung auf als der außerhalb der Lenkradumschäumung 4 liegende Abschnitt 3b.

Der Vorteil dieser Anordnung besteht darin, daß komplexe Anbauteile an Serienlenkradskeletten befestigt werden können, ohne daß die Lenkräder verändert werden müssen. Lediglich das Halteteil ist in seiner Größe und Form dem Abschnitt des Lenkradskeletts anzupassen, an dem es befestigt werden soll.

In der vorliegenden Ausführungsform ist am Halteteil 3 eine Adapterplatte 6 als erstes Anbauteil mittels Schrauben 7 befestigt. Diese Adapterplatte ermöglicht es, ein weiteres Anbauteil 8 in eine Position zu bringen, die eine Montage mittels einer Schraube 9 am Lenkradskelett vorbei gestattet, ohne dieses festigkeitsmäßig nachteilig zu schwächen. Das Anbauteil 8 ist bei der dargestellten Ausführungsform ein Padellschalter.

Sofern einfache Anbauteile am Lenkradskelett angebracht werden sollen, können diese auch ohne einen Adapter direkt am Halteteil 3 durch Schrauben oder Nieten befestigt werden.

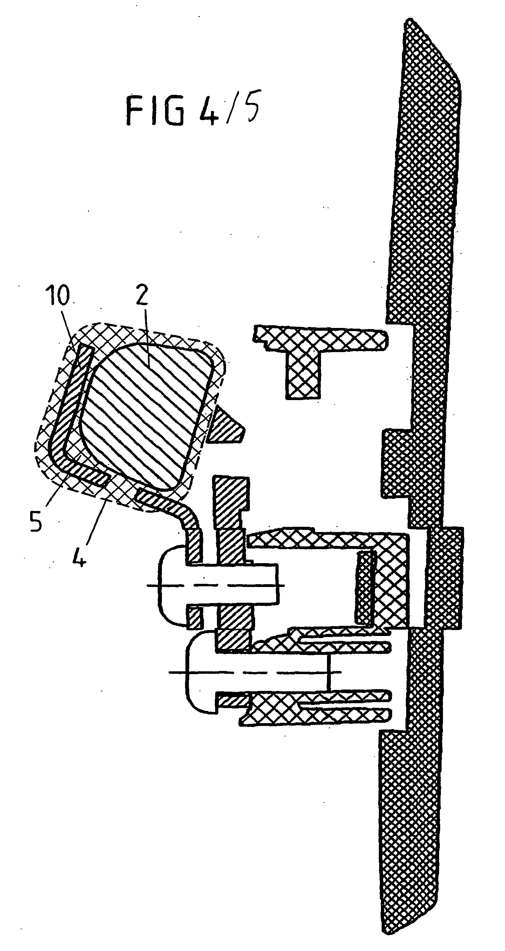

Die Ausführungsform der Fig. 4 entspricht im wesentlichen der in den Figuren 1 bis 3. Der Unterschied besteht in der Form des Halteteils. Es ist ein Halteteil 10 mit L-förmigem Querschnitt im Bereich der Speiche 2 vorgesehen. Auch bei dieser Ausführungsform erstreckt sich die Lenkradumschäumung 4 in den Spalt 5 zwischen der Speiche 2 und dem Halteteil 10. Ein Halteteil dieser Ausführungsform ist völlig ausreichend, wenn leichte Anbauteile zu montieren sind.

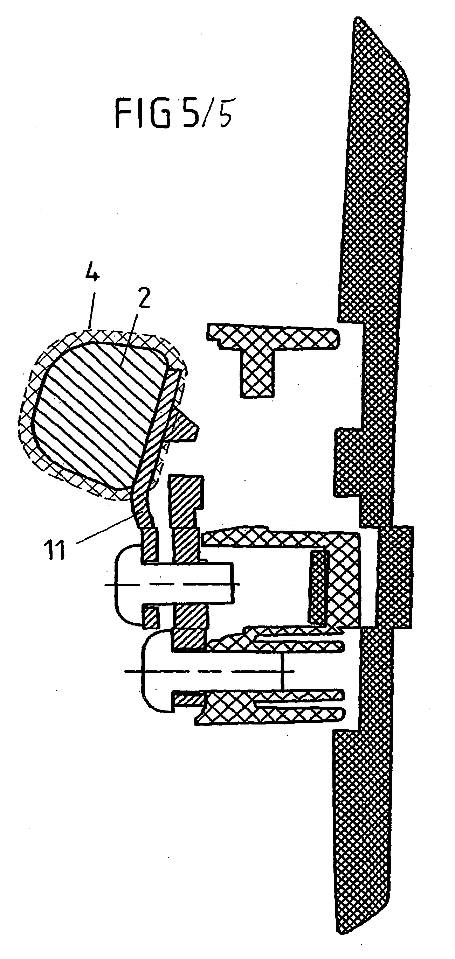

Auch die Ausführungsform der Fig. 5 entspricht in wesentlichen Teilen der in den Figuren 1 bis 3. Der Unterschied besteht auch hier in der Form des Halteteils. Es ist ein Halteteil 11 vorgesehen, daß im Bereich der Speiche 2 flach ausgebildet ist. Dieses Halteteil liegt im Unterschied zu den vorhergehenden Ausführungsformen eng an der Speiche 2 an und wird wie bei den vorherigen Ausführungsformen durch die Lenkradumschäumung 4 gehalten. Bei besonders hohen Ansprüchen an das Halteteil kann dieses bei dieser Ausführungsform vor der Umschäumung auch an die Speiche angeklebt werden. Auch in diesem Fall wird die Festigkeit der Speiche nicht beeinträchtigt.

## Patentansprüche

1. Lenkrad mit mindestens einer Vorrichtung zur Befestigung von Anbauteilen, wobei das Lenkrad ein umschäumtes Lenkradskelett aufweist,
**dadurch gekennzeichnet,**
**daß** als Vorrichtung für die Befestigung von Anbauteilen ein Halteteil (3, 10, 11) am Lenkradskelett (2) vorgesehen ist, das durch die Lenkradumschäumung (4) fixiert ist und für die Befestigung von mindestens einem Anbauteil (6, 8) aus der Lenkradumschäumung (4) herausragt.

2. Lenkrad nach Anspruch 1, **dadurch gekennzeichnet, daß** das Halteteil (11) am Lenkradskelett (2) anliegt.

3. Lenkrad nach Anspruch 1 oder 2, **dadurch gekennzeichnet, daß** das Halteteil (11) am Lenkradskelett (2) angeklebt ist.

4. Lenkrad nach Anspruch 1, **dadurch gekennzeichnet, daß** zwischen dem Lenkradskelett (2) und dem Halteteil (3, 10) ein Zwischenraum (5) vorhanden ist, der von der Lenkradumschäumung (4) ausgefüllt ist.

5. Lenkrad nach mindestens einem der vorhergehenden Ansprüche, **dadurch gekennzeichnet, daß** das Halteteil (3, 10) das Lenkradskelett (2) an einer Stelle zumindest teilweise umschließt.

6. Lenkrad nach Anspruch 5, **dadurch gekennzeichnet, daß** das Halteteil (3) im Bereich des Lenkradskeletts (2) U-förmig ausgebildet ist.

7. Lenkrad nach Anspruch 5, **dadurch gekennzeichnet, daß** das Halteteil (10) im Bereich des Lenkradskeletts (2) L-förmig ausgebildet ist.

8. Lenkrad nach mindestens einem der vorhergehenden Ansprüche 1 bis 4, **dadurch gekennzeichnet, daß** das Halteteil (11) im Bereich des Lenkradskeletts (2) flach ausgebildet ist.

9. Lenkrad nach mindestens einem der vorhergehenden Ansprüche, **dadurch gekennzeichnet, daß** das Halteteil (3, 10, 11) an einer Speiche (2) des Lenkrades vorgesehen ist.

10. Lenkrad nach mindestens einem der vorhergehenden Ansprüche, **dadurch gekennzeichnet, daß** als Halteteil (3, 10, 11) ein Blechteil vorgesehen ist.

11. Lenkrad nach mindestens einem der Ansprüche 1 bis 9, **dadurch gekennzeichnet, daß** als Halteteil (3, 10, 11) ein Kunststoffteil vorgesehen ist.

12. Lenkrad nach mindestens einem der vorhergehenden Ansprüche, **dadurch gekennzeichnet, daß** die Anbauteile (8) an einem mit dem Halteteil (3, 10, 11) verbundenen Adapter (6) als erstem Anbauteil befestigbar sind.

13. Lenkrad nach Anspruch 12, **dadurch gekennzeichnet, daß** eine Adapterplatte (6) angeordnet ist.

14. Lenkrad nach mindestens einem der vorhergehenden Ansprüche, **dadurch gekennzeichnet, daß** das Halteteil (3, 10, 11) mit den Anbauteilen (6, 8) durch Schrauben (7, 9) oder Niete verbunden ist.

15. Lenkrad nach mindestens einem der vorhergehenden Ansprüche, **dadurch gekennzeichnet, daß** der innerhalb der Lenkradumschäumung (4) liegende Abschnitt (3a) des Halteteils (3) eine geringere Längenausdehnung aufweist als der außerhalb der Lenkradumschäumung (4) liegende Abschnitt (3b).

## Claims

1. A steering wheel with at least one device for the fastening of build-on parts, the steering wheel having a steering wheel skeleton surrounded by foam, **wherein** the device provided for the fastening of build-on parts is, on the steering wheel skeleton (2), a holding part (3, 10, 11) which is fixed by the steering wheel foam surround (4) and which projects out of the steering wheel foam surround (4) for the fastening of at least one build-on part (6, 8).

2. The steering wheel as claimed in claim 1, **wherein** the holding part (11) bears against the steering wheel skeleton (2).

3. The steering wheel as claimed in claim 1 or 2, **wherein** the holding part (11) is adhesively bonded to the steering wheel skeleton (2).

4. The steering wheel as claimed in claim 1, **wherein** an interspace (5), which is filled by the steering wheel foam surround (4), is present between the steering wheel skeleton (2) and the holding part (3, 10).

5. The steering wheel as claimed in at least one of the preceding claims, **wherein** the holding part (3, 10) surrounds the steering wheel skeleton (2) at least partially at one point.

6. The steering wheel as claimed in claim 5, **wherein** the holding part (3) has a U-shaped design in the region of the steering wheel skeleton (2).

7. The steering wheel as claimed in claim 5, **wherein** the holding part (10) has an L-shaped design in the region of the steering wheel skeleton (2).

8. The steering wheel as claimed in at least one of the preceding claims 1 to 4, **wherein** the holding part (11) has a flat design in the region of the steering wheel skeleton (2).

9. The steering wheel as claimed in at least one of the preceding claims, **wherein** the holding part (3, 10, 11) is provided on a spoke (2) of the steering wheel.

10. The steering wheel as claimed in at least one of the preceding claims, **wherein** the holding part (3, 10, 11) provided is a sheet metal part.

11. The steering wheel as claimed in at least one of claims 1 to 9, **wherein** the holding part (3, 10, 11) provided is a plastic part.

12. The steering wheel as claimed in at least one of the preceding claims, **wherein** the build-on parts (8) can be fastened to an adaptor (6), as the first build-on part, which is connected to the holding part (3, 10, 11).

13. The steering wheel as claimed in claim 12, **wherein** an adaptor plate (6) is arranged.

14. The steering wheel as claimed in at least one of the preceding claims, **wherein** the holding part (3, 10, 11) is connected to the build-on parts (6, 8) by means of screws (7, 9) or rivets.

15. The steering wheel as claimed in at least one of the preceding claims, **wherein** that portion (3a) of the holding part (3) which lies within the steering wheel foam surround (4) has a smaller longitudinal extent than the portion (3b) which lies outside the steering wheel foam surround (4).

## Revendications

1. Volant de direction équipé d'au moins un dispositif de fixation de pièces structurelles rapportées, ledit volant de direction présentant un squelette enrobé de mousse,
**caractérisé par le fait**
**qu'**une pièce de retenue (3, 10, 11), prévue sur le squelette (2) du volant de direction en tant que dispositif de fixation de pièces structurelles rapportées, est verrouillée à demeure par l'enrobage en mousse (4) dudit volant de direction et fait saillie au-delà dudit enrobage (4), en vue de fixer au moins une pièce structurelle rapportée (6, 8).

2. Volant de direction selon la revendication 1, **caractérisé par le fait que** la pièce de retenue (11) est appliquée contre le squelette (2) dudit volant de direction.

3. Volant de direction selon la revendication 1 ou 2, **caractérisé par le fait que** la pièce de retenue (11) est rapportée par collage sur le squelette (2) dudit volant de direction.

4. Volant de direction selon la revendication 1, **caractérisé par le fait qu'**un espace interstitiel (5), présent entre le squelette (2) dudit volant de direction et la pièce de retenue (3, 10), est comblé par l'enrobage en mousse (4) dudit volant de direction.

5. Volant de direction selon au moins l'une des revendications précédentes, **caractérisé par le fait que** la pièce de retenue (3, 10) ceinture au moins partiellement le squelette (2) dudit volant de direction en un emplacement.

6. Volant de direction selon la revendication 5, **caractérisé par le fait que** la pièce de retenue (3) est réalisée avec configuration en U dans la région du squelette (2) dudit volant de direction.

7. Volant de direction selon la revendication 5, **caractérisé par le fait que** la pièce de retenue (10) est réalisée avec configuration en L dans la région du squelette (2) dudit volant de direction.

8. Volant de direction selon au moins l'une des revendications précédentes 1 à 4, **caractérisé par le fait que** la pièce de retenue (11) est de réalisation aplatie dans la région du squelette (2) dudit volant de direction.

9. Volant de direction selon au moins l'une des revendications précédentes, **caractérisé par le fait que** la pièce de retenue (3, 10, 11) est prévue sur une branche (2) dudit volant de direction.

10. Volant de direction selon au moins l'une des revendications précédentes, **caractérisé par le fait qu'**une pièce en tôle est prévue en tant que pièce de retenue (3, 10, 11).

11. Volant de direction selon au moins l'une des revendications 1 à 9, **caractérisé par le fait qu'**une pièce en matière plastique est prévue en tant que pièce de retenue (3, 10, 11).

12. Volant de direction selon au moins l'une des revendications précédentes, **caractérisé par le fait que** les pièces structurelles rapportées (8) peuvent être fixées à un adaptateur (6) relié à la pièce de retenue (3, 10, 11) et matérialisant une première pièce structurelle rapportée.

13. Volant de direction selon la revendication 12, **caractérisé par** la présence d'une platine d'adaptation (6).

14. Volant de direction selon au moins l'une des revendications précédentes, **caractérisé par le fait que** la pièce de retenue (3, 10, 11) est reliée aux pièces structurelles rapportées (6, 8), par l'intermédiaire de vis (7, 9) ou de rivets.

15. Volant de direction selon au moins l'une des revendications précédentes, **caractérisé par le fait que** le tronçon (3a) de la pièce de retenue (3), qui est situé à l'intérieur de l'enrobage en mousse (4) dudit volant de direction, présente une plus faible étendue en longueur que le tronçon (3b) situé à l'extérieur dudit enrobage en mousse (4).
